(19) Europäisches Patentamt
European Patent Office
Office européen des brevets

(11) EP 3 796 647 A1

(12) EUROPEAN PATENT APPLICATION
published in accordance with Art. 153(4) EPC

(43) Date of publication:
24.03.2021 Bulletin 2021/12

(51) Int Cl.:
H04N 7/15 (2006.01)        H04N 7/14 (2006.01)
G10L 21/02 (2013.01)

(21) Application number: 19802655.1

(22) Date of filing: 18.02.2019

(86) International application number:
PCT/KR2019/001904

(87) International publication number:
WO 2019/221369 (21.11.2019 Gazette 2019/47)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 14.05.2018 KR 20180055021

(71) Applicant: Uprism Co., Ltd.
Seoul 06123 (KR)

(72) Inventor: CHA, Min Soo
Seoul 05510 (KR)

(74) Representative: Habermann, Hruschka &
Schnabel
Patentanwälte
Montgelasstraße 2
81679 München (DE)

(54) **VIDEO CONFERENCE SERVER CAPABLE OF PROVIDING VIDEO CONFERENCE BY USING PLURALITY OF TERMINALS FOR VIDEO CONFERENCE, AND METHOD FOR REMOVING AUDIO ECHO THEREFOR**

(57) Provided are a videoconferencing server capable of providing multiscreen videoconferencing by using multiple videoconferencing terminals, and a method therefor. The videoconferencing server of the present disclosure can be implemented in such a manner that multiple conventional videoconferencing terminals (physical terminals) having one or two displays are logically grouped to operate as a "logical terminal" which operates as if it were one videoconferencing point. Through distribution of videos provided to multiple physical terminals constituting a logical terminal, the videoconferencing server can perform processing as if the logical terminal supported a multiscreen, and the videoconferencing server provides an echo cancellation function in the logical terminal

FIG. 4

## Description

## Technical Field

The present disclosure relates to a multipoint videoconferencing system. More particularly, the present disclosure relates to a videoconferencing server and a method for removing an audio echo therefor, the videoconferencing server being capable of providing multiscreen videoconferencing in which multiple videos for multipoint videoconferencing are displayed using multiple videoconferencing terminals without conventional telepresence equipment.

## Background Art

In general, videoconferencing systems are divided into standards-based videoconferencing terminals (or systems) using standard protocols such as H.323 or the Session Initiation Protocol (SIP), and non-standard videoconferencing terminals using proprietary protocols.

Major videoconferencing equipment companies such as Cisco Systems, Inc., Polycom, Inc., Avaya, Inc., Lifesize, Inc., and the like provide videoconferencing solutions using the above-described standard protocols. However, many companies offer non-standard videoconferencing systems because it is difficult to implement various functions when making products using only the standard technology.

<MCU for multi-videoconferencing based on a standard terminal>

In the videoconferencing system, there are two types of videoconferencing: 1:1 videoconferencing where two videoconferencing terminals (two points) are connected, and multi-videoconferencing where multiple videoconferencing terminals (multiple points) are simultaneously connected. In general, all videoconferencing terminals participating in videoconferencing are individual videoconferencing points, and for each point, at least one conference participant attends.

The standard videoconferencing terminal makes one session to a counterpart and commonly processes only one video and voice so the standard videoconferencing terminal is fundamentally applied to 1:1 videoconferencing. In addition, the standard terminal may process one auxiliary video for document conferencing by using H.239 and Binary Floor Control Protocol (BFCP). Therefore, in the standard videoconferencing system, for the multi-videoconferencing (not 1:1 videoconferencing) where three or more points are connected, a device called a Multipoint Conferencing Unit (MCU) is required. The MCU mixes videos provided from three or more points to generate one video for each of the points and provides the result to the standard terminal, thereby solving the limitations of the standard protocol.

All the videoconferencing terminals involved in the videoconferencing compress videos and voice data created by themselves for transmission to the counterparts. In order to mix the videos, it is necessary to additionally perform a process of decoding, of mixing where the multiple videos are rendered according to a preset layout so as to create a new video, and of encoding. Therefore, mixing is a relatively costly operation, but is used in core equipment, and servers equipped with the MCU functions are distributed at usually high cost.

When mixing the videos, the terminal processes one video so technically, there is no difference with 1:1 conferencing. However, in the video that the MCU provides, videos provided from multiple points are combined in the form of picture-by-picture (PBP), picture-in-picture (PIP), or the like. Further, there is virtually no difference in the bandwidth required at the terminal side, compared to 1:1 conferencing.

<Multi-videoconferencing in a non-standard videoconferencing system>

In the non-standard videoconferencing system, the video is processed without using the standard MCU. When connection to the standard video terminal is required, a separate gateway is used. The terminals of the multiple points go through a procedure of logging into one server and participating in a particular conference room. Some non-standard products perform peer-to-peer (P2P) processing without a server.

In the non-standard videoconferencing system, the reason for not using the MCU or a device performing the MCU function is that implementation of the MCU function requires a costly high-performance server. Instead of performing video mixing, a widely used method is that each terminal simply relays a video generated by itself to other participants (terminals of other points). Compared to the mixing method, the relay method uses less system resources of the server, but the network bandwidth required for video relay increases exponentially.

For example, when calculated under assumption that five people participate in the same conference room and view screens of other participants simultaneously, one person's video is transmitted to the server and the other four people's videos need to be received, which requires 25 times ($5 \times 5$) the bandwidth. When ten videoconferencing terminals are participating, 100 times ($10 \times 10$) bandwidth is required. As the number of videoconferencing participants increases, the required bandwidth increases exponentially.

<Token acquisition for document videoconferencing>

The conventional general videoconferencing terminal is capable of simultaneously outputting a main video screen and a document video screen to two display devices, respectively. However, much inexpensive videoconferencing equipment supports only single display output. The videoconferencing terminal in which only a single display is supported may or may not support H.239 or BFCP for document videoconferencing.

When a single display displays the document video according to H.239 or BFCP protocol, the screen is commonly divided for display. In addition, the terminal itself may provide several layouts for displaying two videos in various forms. In addition, in the terminal, a function of selecting one among the main video and the document video for enlargement is mostly supported.

As described above, the videoconferencing terminal is capable of transmitting one video, but is also capable of further transmitting the document video by using H.239 or BFCP technique. In order to transmit the document video, the presenter needs to obtain a presenter token. Only one terminal (that is, one point) among the terminals participating in the videoconferencing is allowed to have the token. Because of this, only the terminal that obtains the presenter token is capable of simultaneously transmitting the main video of the participant and the document video to the server.

<Telepresence>

In the meantime, major companies such as Cisco Systems, Inc., Polycom, Inc., etc. offer extremely costly videoconferencing equipment using telepresence technology. This equipment is capable of supporting three or four-display output as well as transmitting as many videos as there are supported output displays without the presenter token. In the related industry, the function of transmitting multiple videos for videoconferencing is regarded as the unique function of telepresence equipment.

The telepresence equipment is not capable of interworking with a general videoconferencing terminal. Costly gateway equipment separately provided is required for interworking. Despite of interworking in such a manner, the video quality is much lower than that of the teleconversation between general videoconferencing equipment. For these reasons, videoconferencing terminals supporting three-display output are relatively rare and are limited in expandability due to the limitations of standard technology.

<An audio device of a videoconferencing system>

In the videoconferencing system, a microphone for a participant and a simple button for talking are installed at every designated spot on a conference table. The participant talks pressing the button placed on his/her spot for talking. Regarding the microphone, a so-called "goose-neck microphone" in the curved shape like a goose neck is commonly used. Most goose-neck microphones are integrated with buttons for talking.

Most videoconferencing terminals have an echo cancellation function. For example, assuming that terminal A and terminal B conduct videotelephony, terminal A receives the talker's voice through the microphone and transmits the same to terminal B that is the videotelephony counterpart, but the talker's voice is not output to a speaker of terminal A. Meanwhile, the audio signal transmitted from terminal B is output through the speaker of terminal A, whereby the conference proceeds.

When the audio signal transmitted from terminal B is output through the speaker of terminal A, the audio signal is input through the microphone of terminal A, resulting in an echo. However, terminal A having an echo cancellation function removes, from the signal input through the microphone, the waveform that is the same as the waveform in the audio signal transmitted from terminal B, thereby removing the echo.

Terminal A does not directly output, to the speaker, the audio signal input through the microphone. Therefore, even though terminal A does not remove the echo signal, this is not directly output to the speaker of terminal A. The echo signal is transmitted to terminal B, and terminal B outputs the echo signal as it is because the echo signal is the audio signal provided by terminal A, which results an echo. Further, the echo signal is transmitted back to terminal A in the same process. Terminal A outputs the echo signal to the speaker because the echo signal is the audio signal provided from terminal B. This process occurs repeatedly in succession, resulting in a loud noise.

The echo cancellation method is to remove, from the input audio signal, the waveform that is the same as that in the output audio signal. Generally, there is a delay time ranging from several ten to several hundred milliseconds (ms) for the audio to be played from the output device and input to the microphone for processing. The delay times vary from device to device, and thus it is not easy to detect the audio signal to be removed from the input audio signal by using the echo cancellation function. The fact that the signal strength input to the microphone is different from the output signal strength makes removal of voice waveform difficult. Naturally, echo cancellation is more difficult in space with a lot of noise or echoing sound. Therefore, echo cancellation is a complex and difficult technique in the field of videoconferencing.

(Patent Document 1 of Related Art) KR 10-2016-0062787 A (method of mixing multiple video feeds for video conference, and video conference terminal, video conference server, and video conference system using the method)

**Disclosure**

**Technical Problem**

The present disclosure is directed to providing an audio processing method for a logical terminal of a videoconferencing server that provides a videoconferencing service through a logical terminal structure.

In addition, the present disclosure is directed to providing a method for removing an audio echo in a logical terminal service.

In addition, the present disclosure is directed to providing a videoconferencing server capable of providing a multipoint videoconferencing service and of providing a logical terminal service in which multiple videoconferencing terminals are processed as one videoconferencing point.

## Technical Solution

In order to achieve the above objectives, according to the present disclosure, there is provided a videoconferencing service provision method of a videoconferencing server, the method including a registration step, a call connection step, a source audio reception step, an audio processing step, and an audio output step, whereby a logical terminal operates as one virtual videoconferencing point.

At the registration step, multiple physical terminals are registered as one logical terminal so that the multiple physical terminals operate like one videoconferencing point, and one of the multiple physical terminals is registered as an output-dedicated physical terminal. At the call connection step, videoconferencing between multiple videoconferencing points is connected, and with respect to the logical terminal, individual connections to the multiple physical terminals constituting the logical terminal are provided. At the source audio reception step, source audio signals provided by the multiple videoconferencing points are received, and with respect to the logical terminal, the source audio signals are received from the respective multiple physical terminals. At the audio processing step, from entire source audio received at the source audio reception step, the audio signals provided by the other videoconferencing points are mixed into an output audio signal to be provided to the logical terminal. At the audio output step, the output audio signal is transmitted to the output-dedicated physical terminal among the multiple physical terminals belonging to the logical terminal.

According to an embodiment of the present disclosure, the videoconferencing service provision method may further include: removing, by using the output audio signal, an echo from the source audio signal provided by the physical terminal other than the output-dedicated physical terminal among the source audio signals received from the logical terminal.

According to another embodiment of echo cancellation, at the audio output step, the output audio signal is transmitted to the physical terminal other than the output-dedicated physical terminal among the multiple physical terminals belonging to the logical terminal so that the output audio signal is used for echo cancellation, and thus the physical terminal other than the output-dedicated physical terminal does not output the output audio signal to a speaker and uses the output audio signal as a reference audio signal for echo cancellation.

In the meantime, at the audio processing step, when the other videoconferencing points are a second logical terminal including multiple physical terminals, one audio signal selected among audio signals provided by the multiple physical terminals belonging to the second logical terminal is mixed into the output audio signal to be provided to the first logical terminal.

In the meantime, the videoconferencing service provision method of the present disclosure may further include: a source video reception step where source videos provided by the multiple videoconferencing points are received, and with respect to the logical terminal, the source videos are received from the respective multiple physical terminals; and a multiscreen video provision step where among all the source videos received at the source video reception step, the videos provided by the other videoconferencing points are distributed to the multiple physical terminals of the logical terminal, whereby the logical terminal operates as the one virtual videoconferencing point.

The present disclosure also applies to a videoconferencing server capable of providing a videoconferencing service. The server of the present disclosure includes a terminal registration unit, a teleconversation connection unit, and an audio processing unit.

The terminal registration unit registers multiple physical terminals as one logical terminal that operates like one videoconferencing point, and registers one of the multiple physical terminals as an output-dedicated physical terminal. The teleconversation connection unit connects videoconferencing between multiple videoconferencing points including the logical terminal wherein with respect to the logical terminal, individual connections to the multiple physical terminals constituting the logical terminal are provided, and receives source audio signals from the multiple videoconferencing points wherein with respect to the logical terminal, the source audio signals are received from the respective multiple physical terminals. The audio processing unit mixes the audio signals provided by the other videoconferencing points from entire source audio received, into an output audio signal to be provided to the logical terminal, and transmits the output audio signal to the output-dedicated physical terminal among the multiple physical terminals belonging to the logical terminal.

The videoconferencing server of the present disclosure may further include an echo processing unit removing, by using the output audio signal, an echo from the source audio signal provided by the physical terminal other than the output-dedicated physical terminal among the source audio signals received from the logical terminal.

## Advantageous Effects

The videoconferencing server of the present disclosure can be implemented in such a manner that the multiple videoconferencing terminals (physical terminal) having a limited number (generally, one or two) of displays are logically grouped to operate as the logical terminal which operates as if it were one videoconferencing point. Through distribution of videos provided to the multiple physical terminals constituting the logical terminal, the videoconferencing server can perform processing as if the logical terminal supported a multiscreen.

In multipoint videoconferencing, the videoconferencing server distributes the videos from other videoconferencing points according to the number of screens, that is, display devices, which the logical terminal has. Thus, in terms of the physical terminals included in the logical terminal, the number of other videoconferencing points to be displayed is reduced compared to the related art, thereby reducing the complexity of the videos displayed on one screen. As the complexity of the videos is lowered, the video quality in, for example, a poor-performance physical terminal or a slow network is improved.

The logical terminal of the present disclosure is implemented only through the internal processing by the videoconferencing server, and there is no direct connection between the physical terminals. Thus, even if the video codecs differ, the system performances differ, or the physical terminals are produced by different manufacturers, there is no problem of being grouped into one logical terminal for processing. Naturally, the multiscreen is provided through the logical terminal, so that there is no need to update the system resources of individual videoconferencing terminals for supporting the multiscreen.

According to the present disclosure, the audio signals can be provided in such a manner that the audio is provided to the logical videoconferencing terminal implemented using the multiple physical terminals which operates as if it were one videoconferencing terminal. Therefore, even though the multiple physical terminals belonging to the logical terminal individually have speakers, only a particular output-dedicated physical terminal outputs the audio signal, whereby the logical terminal operates as if it were one videoconferencing point.

In addition, according to the present disclosure, in the process of processing the audio signals for the multiple physical terminals that operate as one logical terminal, it is possible to remove the echo included in the audio signals input through the physical terminal that does not output the audio signals because it is not the output-dedicated physical terminal.

**Description of Drawings**

FIG. 1 is a diagram illustrating a configuration of a videoconferencing system according to an embodiment of the present disclosure,
FIG. 2 is a diagram illustrating multi-videoconferencing connection where all the three points in FIG. 1 participate,

FIG. 3 is a diagram illustrating a multiscreen videoconferencing service provision method of the videoconferencing server of the present disclosure,
FIG. 4 is a diagram illustrating audio signal processing in the videoconferencing system in FIG 1,
FIG. 5 is a flowchart illustrating an audio processing method of the present disclosure, and
FIG. 6 is a flowchart illustrating an echo cancellation method in a logical terminal.

**Best Mode**

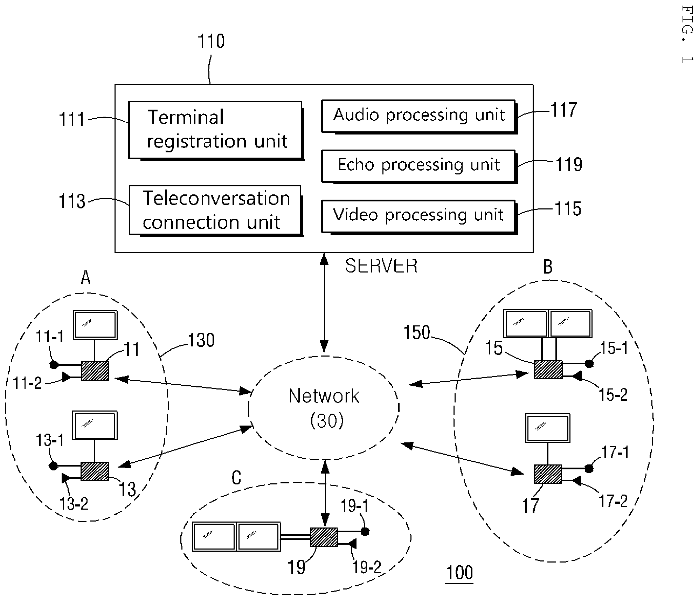

Hereinafter, the present disclosure will be described in detail with reference to the accompanying drawings.
Referring to FIG. 1, a videoconferencing system 100 of the present disclosure includes a server 110 and multiple videoconferencing terminals that are connected over a network 30. The videoconferencing system supports 1:1 videoconferencing where two connection points are connected as well as multi-videoconferencing where three or more points are connected. The videoconferencing terminals 11, 13, 15, 17, and 19 shown in FIG.1 show connectable videoconferencing terminals, as an example.
The connection network 30 between the server 110 and the videoconferencing terminals 11, 13, 15, 17, and 19 is an IP network, and may include a heterogeneous network connected via a gateway or may be connected with the heterogeneous network. For example, a wireless telephone using a mobile communication network may be the videoconferencing terminal of the present disclosure. In this case, the network 30 includes the mobile communication network where connection via a gateway is made to process an IP packet.
The server 110 controls the videoconferencing system 100 of the present disclosure, generally. In addition to functions of a conventional general server for processing videoconferencing, the server 100 includes a terminal registration unit 111, a teleconversation connection unit 113, a video processing unit 115, an audio processing unit 117, and an echo processing unit 119.
The terminal registration unit 111 performs registration, setting, management, and the like of a physical terminal and a logical terminal, which will be described below. The teleconversation connection unit 113 controls videoconferencing call connection of the present disclosure. When the videoconferencing call is connected, the video processing unit 115 processes (mixing, decoding, encoding, and the like) the videos provided between the physical terminals and/or logical terminals, thereby implementing a multiscreen, similarly to telepresence.
The audio processing unit 117, which is the feature of the present disclosure, controls audio processing in the logical terminal. The audio processing unit 119 removes an echo from the auto signal transmitted from the logical terminal.
Operation of the terminal registration unit 111, the teleconversation connection unit 113, the video processing unit 115, the audio processing unit 117, and the echo processing unit 119 will be described again below.

Logical terminal

All the videoconferencing terminals 11, 13, 15, 17, and 19 included in the videoconferencing system 100 support the standard protocol related to videoconferencing. Each of the videoconferencing terminals 11, 13, 15, 17, and 19 is not a terminal capable of providing the telepresence service described in Background Art, but is a videoconferencing terminal to which one display device is connected or to which two display devices are connected for document conferencing. Examples of the standard protocol include H.323, Session Initiation Protocol (SIP), and the like. Naturally, among the videoconferencing terminals 11, 13, 15, 17, and 19, the terminal supporting document conferencing supports H.239 and Binary Floor Control Protocol (BFCP).

For example, in the case where the SIP session is created between the server 110 and the videoconferencing terminals 11, 13, 15, 17, and 19 according to the SIP protocol, a video signal or audio signal described below is transmitted in the form of an RTP packet.

In addition, the videoconferencing terminals 11, 13, 15, 17, and 19 are conventional videoconferencing terminals that have respective video/voice codecs, and have microphones 11-1, 13-1, 15-1, 17-1, and 19-1 converting the voices of the talkers into audio signals and speakers 11-2, 13-2, 15-2, 17-2, and 19-2 for audio output, respectively.

The videoconferencing terminals connected to the videoconferencing system of the present disclosure may constitute a "logical terminal". The logical terminal is a logical combination of multiple videoconferencing terminals as if there was one videoconferencing terminal. The logical terminal may be composed of two or more videoconferencing terminals, but no direct connection is provided between the multiple videoconferencing terminals constituting the logical terminal. In other words, direct connection between the multiple videoconferencing terminals constituting the logical terminal is not required in constituting the logical terminal.

Hereinafter, in order to distinguish between the logical terminal and the conventional general videoconferencing terminal, the conventional general videoconferencing terminal is referred to as a "physical terminal". In other words, the logical terminal is merely a logical combination of multiple physical terminals for videoconferencing.

Each conventional videoconferencing terminal operates as one videoconferencing point. However, in the present disclosure, all of the multiple videoconferencing terminals belonging to the logical terminal operate like one terminal, so all of them operate as one videoconferencing point. In another aspect, the logical terminal is one videoconferencing point that has as many display devices as there are display devices which are individually owned by the multiple physical terminals, namely, the constituent members of the logical terminal. When necessary, the logical terminal designates one of the multiple constituent terminals as a representative terminal. No matter how many physical terminals the logical terminal includes, the logical terminal is treated as a single videoconferencing point in videoconferencing.

For example, FIG. 1 shows the multi-videoconferencing system 100 where a first point A, a second point B, and a third point C are connected to each other. A first logical terminal 130 is placed at the first point A, a second logical terminal 150 is placed at the second point B, and a fifth physical terminal 19 is placed at the third point C, so the system 100 shown in FIG. 1 is in a state where two logical terminals 130 and 150 and one physical terminal 19 are connected by the server 110. The first logical terminal 130 is composed of a first physical terminal 11 and a second physical terminal 13 that have one display device each, and the second logical terminal 150 is composed of a third physical terminal 15 having two display devices and a fourth physical terminal 17 having one display device.

The logical terminal is a logical component managed by the server 110 and the standard protocol between the server 110 and the terminal supports only 1:1 connection, and thus the connection between the server 110 and the logical terminal means that the multiple physical terminals constituting the logical terminal are individually connected to the server 110 according to the standard protocol. For example, according to the SIP protocol, FIG. 1 shows that regardless of the configuration of the logical terminal, each of the five physical terminals 11, 13, 15, 17, and 19 has the SIP session created to the server 110 so that a total of five sessions are created.

According to the present disclosure, the server 110 of the videoconferencing system supports the following connections.

(1) Videoconferencing in which one physical terminal and one logical terminal are connected

For example, this relates to a case in which the fifth physical terminal 19 in FIG. 1 calls the first logical terminal 130. The server 110 simultaneously or sequentially calls the first and the second physical terminal 11 and 13 constituting the first logical terminal 130, for connection.

(2) Videoconferencing in which a single logical terminal calls one physical terminal

For example, this relates to a case in which the user causes the first physical terminal 11 that is the representative terminal of the first logical terminal 130 to call the fifth physical terminal 19. The server 110 simultaneously or sequentially calls the second physical terminal 13 that is the other physical terminal of the first logical terminal 130 and the fifth physical terminal 19 that is a called party, for connection.

(3) Videotelephony in which one logical terminal calls another logical terminal

For example, this relates to a case where the first logical terminal 130 in FIG. 1 calls the second logical terminal 150. When the user uses the first physical terminal 11 that is the representative terminal of the first logical terminal 130 to call the second logical terminal 150, the server 110 simultaneously or sequentially calls the two physical terminals 15 and 17 constituting the second logical terminal 150 and calls the second physical terminal 13 that is the terminal other than the representative terminal of the calling party, for connection.

(4) Multipoint videoconferencing

The videoconferencing system of the present disclosure supports, as shown in FIG. 1, connection among three or more points wherein the logical terminal is connected as one point. One logical terminal and two physical terminals may be connected, two or more logical terminals and one physical terminal may be connected, or two or more logical terminals may be connected to each other. The multipoint connection may be processed using a method known in the related art. However, there is a difference in that when a newly participating point is a logical terminal, connection to all the physical terminals that are constituent members of the logical terminal needs to be provided.

<Multiscreen support>

The videoconferencing system 100 of the present disclosure may provide a multiscreen, similarly to telepresence, using a logical terminal structure. Although the logical terminal is a virtual terminal, the logical terminal is processed as having as many screens as all the multiple physical terminals, which are the constituent members, are able to provide.

The server 110 reconstructs the multi-videoconferencing video using a method of matching the number (m1, or the number of videos that the server needs to provide to each logical terminal) of display devices included in each logical terminal with the total number (M, the number of source videos) of physical terminals included in the points that are connected to videoconferencing, thereby re-editing m3 videos into m1 videos with respect to the logical terminal and providing the resulting videos. Herein, m3, as the number of source videos that the logical terminal needs to display for videoconferencing, is shown in Equation 1 below.

[Equation 1]

$$m3 = M - m2$$

Herein, m2 is the number of physical terminals constituting each logical terminal.

In the meantime, each physical terminal may make a setting or a request in such a manner as to display its video (source video). In this case, when with respect to each logical terminal, the m3 videos are re-edited into the m1 videos and the resulting videos are distributed to each of the physical terminals constituting the logical terminal, the source videos provided by the corresponding physical terminals are also mixed and provided.

Unless m3 and m1 are the same value, the server 110 needs to perform reprocessing in which the source videos are mixed. However, according to an embodiment, with respect to the logical terminal, the m3 videos may not be re-edited into the m1 videos, and the m3 videos may be sequentially provided at regular time intervals. For example, in the case of m3=3 and m1=1, three source videos are not re-edited through mixing, and the like, and the three source videos may be sequentially provided. In this case, relay-type videoconferencing processing is possible, which was impossible in the conventional standard videoconferencing terminal.

In the meantime, regardless of the configuration of the logical terminal, any physical terminal participating in the videoconferencing of the present disclosure may provide two source videos when a presenter token is obtained. For example, as a result of obtaining the presenter token, the first physical terminal 11 may provide a main video with a video for document conferencing to the server 110. In this case, M is the sum of one and the total number of physical terminals included in the points connected to videoconferencing.

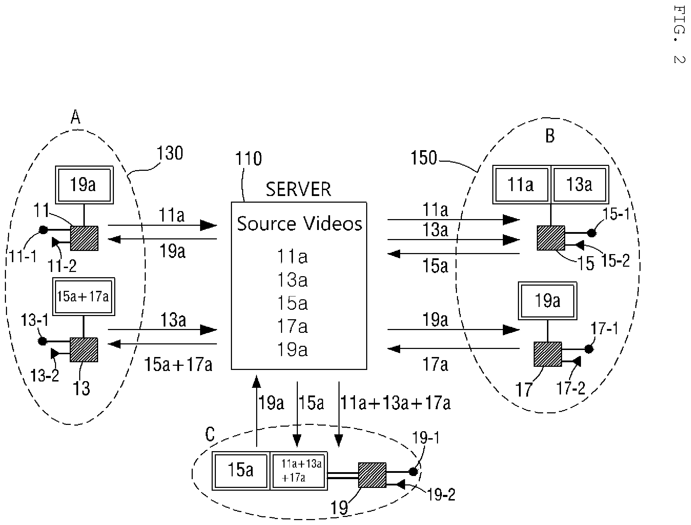

FIG. 2 is a diagram illustrating multi-videoconferencing connection where all the three points in FIG. 1 participate. It is assumed that the first logical terminal 130, the second logical terminal 150, and the fifth physical terminal 19 are connected to each other so that multi-videoconferencing connection among three points is provided. Referring to FIG. 2, the number of the physical terminals 11, 13, 15, 17, and 19 involved in this videoconferencing is five (M=5). That is, five source videos 11a, 13a, 15a, 17a, 19a that the five physical terminals 11, 13, 15, 17, and 19 provide are provided to the server 110, so the server 110 edits the five source videos according to the number (m1) of display devices that each point has and provides the result to each point.

The first logical terminal 130 has two display devices that the first physical terminal 11 and the second physical terminal 13 have, which refers to m1=2 and m2=2. In this multi-videoconferencing with three points, physical terminals connected to the first logical terminal 130 for videoconferencing are the third to fifth physical terminals 15, 17, and 19, which are three (m3, 3=5-2) in number, so three source videos that the three physical terminals provide need to be re-edited into two videos for display. Separately, it may be determined which source video is displayed on which screen. In FIG. 2, the first physical terminal 11 displays the source video from the fifth physical terminal 19, and the second physical terminal 13 displays one video obtained by mixing the source videos of the third physical terminal 15 and the fourth physical terminal 17.

The third physical terminal 15 has two display devices and the fourth physical terminal 17 has one display device, so the second logical terminal 150 has the three display devices, which refers to m1=3 and m2=2. Therefore, with respect to the second logical terminal 150, the server 110 causes the source videos that the three physical terminals provide to be displayed as three videos. Since the number of source videos to be displayed and the number of screens are the same, one for each is displayed. Separately, it may be determined which source video is displayed on which screen. In FIG. 2, the third physical terminal 15 displays the source videos of the first and the second physical terminal 11 and 13, and the fourth physical terminal 17 displays the source video that the fifth physical terminal 19 provides.

Equation 1 is applied to the fifth physical terminal 19 in the same manner. The fifth physical terminal 19 is related to m1=2 and m2=1, so the server 110 re-edits four source videos (m3=5-1) into two (m1) videos and provides the result to the fifth physical terminal 19. The fifth physical terminal 19 needs to display, on the two display devices, the source videos that a total of four physical terminals 11, 13, 15, and 17 of the first logical terminal 130 and the second logical terminal 150 provide, so the four source videos are appropriately edited to be displayed as two videos.

When the third physical terminal 15 of the second logical terminal 150 obtains the presenter token, two source videos are provided. In this case, the second logical terminal 150 provides a total of three source videos, and M is 6. The number of source videos to be processed by the server 110 for transmission to the first logical terminal 130, the second logical terminal 150, and the fifth physical terminal 19 is greater than that of the description above by one.

## Videoconferencing service (video processing) for logical terminal

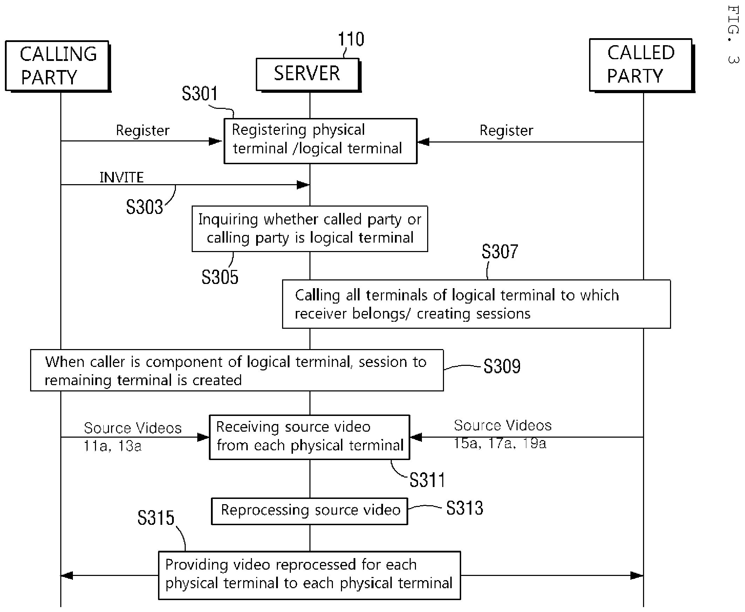

Hereinafter, a multiscreen videoconferencing service provision method of the server 110 will be described with reference to FIG. 3. For convenience of description, a teleconversation connection process in which the first physical terminal 11 of the first logical terminal 130 in FIG. 2 is the calling party and the second logical terminal 150 is the called party will be mainly described. First, a process of registering the logical terminal is required.

<A registration step of the logical terminal: S301>

The terminal registration unit 111 of the server 110 executes and manages registration of the physical terminal and the logical terminal. Registration of the physical terminal needs to precede registration of the logical terminal or simultaneously registration needs to be performed. For registration of each physical terminal, an IP address of each physical terminal is essential.

The process of registering the physical terminal may be performed by various methods known in the related art. For example, the registration of the physical terminal may be executed using a location registration process through a register command on the SIP protocol. Herein, a telephone number of the physical terminal, and the like may be included. When the location of the physical terminal is registered, the server 110 determines whether the physical terminal is currently turned on and is in operation.

In the registration of the logical terminal, the physical terminals included in the logical terminal are designated, and the number of the display devices connected to each physical terminal is registered. According to an embodiment, the arrangement (or relative positions) between the display devices included in the logical terminal, a video mixing method (including a relay method) or a layout of the mixed video according to the number (m3) of source videos, or the like may be set. For example, the terminal registration unit 111 receives configuration information for configuring the first physical terminal 11 and the second physical terminal 13 as the first logical terminal 130, for registration and management. In the registration of the logical terminal, a web page that the terminal registration unit 111 provides may be used, or a separate access terminal may be used.

In addition, with respect to the logical terminal, one of the physical terminals constituting the logical terminal is registered as a physical terminal for outputting an audio signal (hereinafter, referred to as an output-dedicated physical terminal) described below.

<An outgoing call-connection step for videoconferencing: S303>

Videoconferencing call establishment between videoconferencing points is initiated as the teleconversation connection unit 113 of the server 110 receives a call connection request from one point. In the case of the SIP protocol, the teleconversation connection unit 113 receives an SIP signaling message which is INVITE. In the example in FIG. 2, the first physical terminal 11 of the first logical terminal 130 calls the third physical terminal 15 of the second logical terminal 150, so the teleconversation connection unit 113 receives the INVITE message in which the first physical terminal 11, which is the calling party, calls the third physical terminal 15 by using the telephone number or the IP address of the third physical terminal 15.

<Inquiring whether caller and/or receiver is logical terminal: S305>

The teleconversation connection unit 113 of the server 110 inquires of the terminal registration unit 111 whether the called-party telephone number is one of the telephone numbers (or IP addresses) of the respective physical terminals constituting the logical terminal. Similarly, the teleconversation connection unit 113 of the server 110 inquires of the terminal registration unit 111 whether the calling party has one of the telephone numbers (or IP addresses) of the respective physical terminals constituting the logical terminal. Through this, the teleconversation connection unit 113 determines whether the call connection is connection to the logical terminal.

According to an embodiment, when the called party is the physical terminal of the logical terminal, the teleconversation connection unit 113 additionally identifies whether the physical terminal is the representative terminal of the logical terminal. When the physical terminal is not the called-party representative terminal, the called party is not processed as the logical terminal. In addition, in the case of the calling party, it is additionally identified whether the calling party is the representative terminal of the logical terminal. When being not the calling-party representative terminal, the calling party is not processed as the logical terminal.

<Videoconferencing connection: S307 and S309>

When the called-party telephone number is the logical terminal's number, the teleconversation connection unit 113 performs a procedure for creating SIP sessions to all the physical terminals belonging to the called-party logical terminal. In the example in FIG. 2, the called party is the second logical terminal 150, so the teleconversation connection unit 113 individually creates SIP sessions to the third physical terminal 15 and the fourth physical terminal 17. Herein, the teleconversation connection unit 113 may transmit the INVITE messages to the third physical terminal 15 and the fourth physical terminal 17 simultaneously or sequentially at step S307.

In the example in FIG. 2, the calling party is also the logical terminal, so the teleconversation connection unit 113 creates the SIP session to the second physical terminal 13 of the first logical terminal 130. In the example in FIG. 2, when the fifth physical terminal 19 participates in the videoconferencing, the SIP session to the fifth physical terminal 19 is also created. Accordingly, the first logical terminal 130, the second logical terminal 150, and the fifth physical terminal 19 participate in the videoconferencing, and thus a total of five SIP sessions are created at step S309.

All the physical terminals of the called party receiving the INVITE and/or the calling party perform negotiation in which a video, a voice codec, and the like are selected through Session Description Protocol (SDP) information. When the negotiation is successfully completed, the actual session is established and the call is connected.

<A step of receiving the source video from each single physical terminal: S311>

As described above, since the teleconversation connection of the logical terminal is actually the connection to the individual physical terminals constituting the logical terminal, multiple sessions are established. The physical terminals constituting the logical terminal individually create the source videos and transmit the same to the server 110.

Therefore, in the case of FIG. 2, since the first logical terminal 130, the second logical terminal 150, and the fifth physical terminal 19 participate in the videoconferencing, the teleconversation connection unit 113 receives five source videos 11a, 13a, 15a, 17a, and 19a that are provided by the respective five physical terminals 11, 13, 15, 17, and 19 with the sessions connected.

<Reprocessing of the source video by the server: S313>

In order to render the source videos received from the physical terminals into a video for each point, the video processing unit 115 of the server 110 decodes the source videos, mixes the decoded videos, and encodes the resulting videos. In other words, the video processing unit 115 may re-edit m3 videos into m1 videos with respect to each logical terminal.

The video processing unit 115 performs mixing on the source videos according to a layout preset for each logical terminal or each physical terminal or according to a layout requested by each terminal.

As described above, without video processing by the video processing unit 115, the teleconversation connection unit 113 may provide the source videos sequentially at preset time intervals so that the source videos are displayed in relays. In this case, transmission takes place as it is without mixing and the like. When matching with the video codec of the terminal is necessary, change of the video format or transcoding is sufficient therefor.

<Transmitting of the encoded video data to each physical terminal: S315>

The teleconversation connection unit 113 provides the videos that the video processing unit 115 processes for the respective physical terminals 11, 13, 15, 17, and 19, to the respective physical terminals 11, 13, 15, 17, and 19 that participate in the videoconferencing. As a result, each point participating in the videoconferencing may receive a service similar to telepresence which uses a multiscreen.

By the above-described method, the multiscreen for videoconferencing of the videoconferencing system 100 of the present disclosure is processed.

(Embodiment) Another method of step S305

When registering the logical terminal, the terminal registration unit 111 generates a virtual telephone number for the logical terminal to register the same. In this case, at step S305, only when the called-party telephone number is the virtual telephone number of the logical terminal, the called party is processed as the logical terminal.

Provision of the videoconferencing service for the logical terminal (audio processing)

Since the videoconferencing system 100 of the present disclosure provides a feature which is the logical terminal, unlike the conventional videoconferencing system or device, the audio signal processing in the server 110 is different from the conventional method.

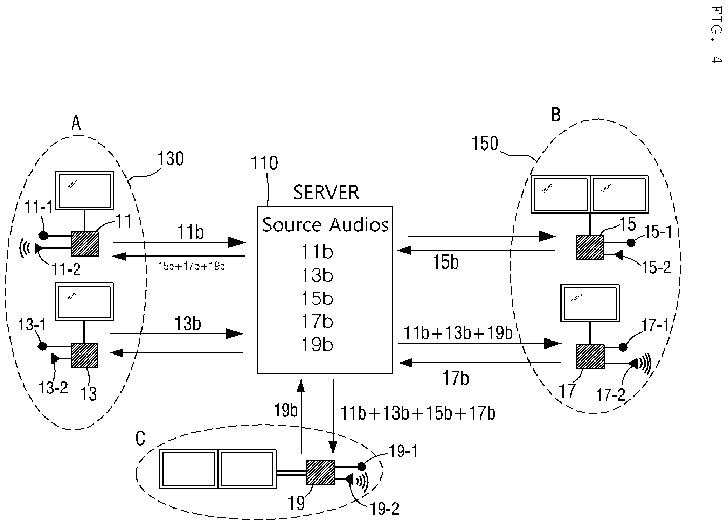

The audio processing unit 117 of the server 110 decodes the audio signal from the RTP packet that is received by the teleconversation connection unit 113 from each point participating in the videoconferencing. The videoconferencing system 100 in FIG. 4 shows the videoconferencing system 100 in FIG. 1 in terms of audio signal processing. As described above, the videoconferencing terminals 11, 13, 15, 17, and 19 have the respective video/voice codecs, and have the microphones 11-1, 13-1, 15-1, 17-1, and 19-1 converting the voices of the talkers into audio signals and the speakers 11-2, 13-2, 15-2, 17-2, and 19-2 for audio output, respectively.

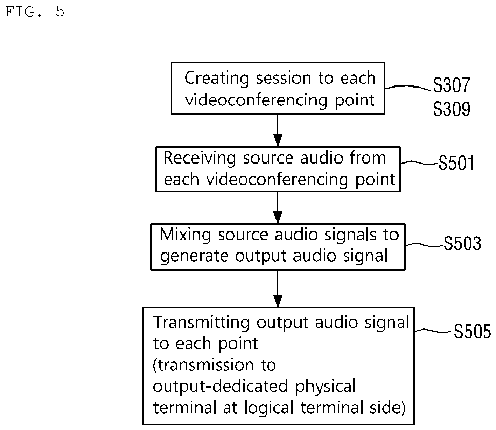

As described above, the videoconferencing terminals 11, 13, 15, 17, and 19 have the SIP sessions individually created to the server 110 and are each the terminal for videoconferencing. Therefore, unless otherwise set, all the physical terminals participating in the videoconferencing configured by the server 110 may transmit the audio signals to the server 110 through the SIP sessions regardless of the configuration of the logical terminal. Hereinafter, the audio signal processing by the audio processing unit 117 will be described with reference to FIG. 5. The method in FIG. 5 proceeds after the SIP sessions are created through steps S307 and S309.

<Source audio receiving step: S501>

Referring to FIG. 4, all the physical terminals 11, 13, 15, 17, and 19 participating in the videoconferencing have the SIP sessions individually created to the server 110, and convert the voice or audio that is input to the respective microphones 11-1, 13-1, 15-1, 17-1, and 19-1 into audio signals for provision in the form of RTP packets to the server 110. Thus, the teleconversation connection unit 113 of the server 110 receives all the RTP packets provided by all the physical terminals 11, 13, 15, 17, and 19 participating in the videoconferencing. This step corresponds to step S311 related to the reception of the source videos.

<Source audio processing step: S503>

The audio processing unit 117 decodes the RTP packets received through the SIP sessions to obtain the audio signals (hereinafter, referred to as "source audio signals") provided from all the physical terminals 11, 13, 15, 17, and 19 participating in the videoconferencing, and mixes the signals into an audio signal (hereinafter, referred to as an "output audio signal") to be provided to each videoconferencing point. This corresponds to step S313.

The output audio signal to be provided to each videoconferencing point is obtained by mixing audio signals provided from different videoconferencing points. Herein, various methods are possible.

(Method 1) First, regardless of whether each videoconferencing point is the physical terminal or the logical terminal, all audio signals provided from the corresponding videoconferencing point may be mixed. For example, in the output audio signal to be transmitted to the first logical terminal 130, the source audio signals provided by the second logical terminal 150 and the fifth physical terminal 19 need to be mixed, so the audio processing unit 117 mixes the source audio signals provided by the third physical terminal 15, the fourth physical terminal 17, and the fifth physical terminal 19. In the audio signal to be transmitted to the second logical terminal 150, the source audio signals provided by the first logical terminal 130 and the fifth physical terminal 19 need to be mixed, so the audio processing unit 117 mixes the source audio signals provided by the first physical terminal 11, the second physical terminal 13, and the fifth physical terminal 19. In the audio signal to be transmitted to the fifth physical terminal 19, the source audio signals provided by the first logical terminal 130 and the second logical terminal 150 need to be mixed, so the audio processing unit 117 mixes the source audio signals provided by the first physical terminal 11, the second physical terminal 13, the third physical terminal 15, and the fourth physical terminal 17.

(Method 2) When another videoconferencing point is the logical terminal, only the audio signal provided by one physical terminal selected among the physical terminals belonging to the logical terminal is subjected to mixing for the output audio signal. For example, in the output audio signal to be transmitted to the first logical terminal 130, the source audio signals provided by the second logical terminal 150 and the fifth physical terminal 19 need to be mixed. Since the second logical terminal 150 includes the third physical terminal 15 and the fourth physical terminal 17, the audio processing unit 117 mixes only the source audio signal provided by one terminal selected among the third physical terminal 15 and the fourth physical terminal 17 with the source audio signal provided by the fifth physical terminal 19. Herein, the source audio signal selected for mixing does not necessarily have to be the source audio signal provided by the output-dedicated physical terminal.

There are various reasons for adopting this method. For example, in the specific application step of this method, the audio signal received through the microphone closest to the talker's location on the side of the second logical terminal 150 may be selected for mixing, and the audio signal provided by the other physical terminal of the second logical terminal 150 may not be mixed. This solves the problem that due to the slight time difference occurring when the talker's speech is input to all the microphones 15-1 and 17-1 of the second logical terminal 150, the audio or voice is not clearly heard.

<Transmission of the output audio signal: S505>

The audio processing unit 117 compresses the "output audio signal" obtained by mixing for provision to each videoconferencing point in a preset audio signal format and encodes the result into the RTP packet for transmission to each videoconferencing point. However, on the side of the logical terminal, the "output audio signal" is transmitted to the output-dedicated physical terminal described below.

The output-dedicated physical terminal

Regardless of the logical terminal settings, the server 110 establishes the SIP sessions to all the physical terminals participating in the videoconferencing, and the audio signals are transmitted through the SIP sessions. Herein, when the videoconferencing point is the logical terminal like the first point A and the second point B, the audio processing unit 117 transmits the newly encoded audio signal only to the output-dedicated physical terminal. When the videoconferencing point is not the logical terminal but the physical terminal like the third point C, the audio processing unit 117 transmits the newly encoded audio signal to the physical terminal as in the related art. To this end, at the process of registering the logical terminal, the terminal registration unit 111 of the server 110 receives and registers one of the physical terminals constituting the logical terminal as the "output-dedicated physical terminal". The "output-dedicated physical terminal" may be the "representative terminal" of the logical terminal described above, or may be determined as a terminal different from the representative terminal.

When the logical terminal participates in the videoconferencing, the audio signals provided by another videoconferencing point are not output through all the physical terminals constituting the logical terminal, but output only through the output-dedicated physical terminal. Otherwise, the same audio signals are output through the multiple speakers with slight time differences and thus clear audio is not output. In addition, when the output-dedicated physical terminal is not determined, a number of complex cases regarding echo cancellation occur, which is inappropriate.

Therefore, all the physical terminals constituting the logical terminal convert the voices of the talkers, and the like into the audio signals and are capable of providing the results to the server 110, but the audio signal provided by the server 110 is provided only to the output-dedicated physical terminal.

Referring to FIG. 4, it is assumed that in the first logical terminal 130 of the first point A, the first physical terminal 11 is registered as the output-dedicated physical terminal, and that in the second logical terminal 150 of the second point B, the fourth physical terminal 17 is registered as the output-dedicated physical terminal.

The audio processing unit 117 provides the output audio signal (15b+17b+19b) to be provided to the first point A only to the first physical terminal 11 that is the output-dedicated physical terminal, and provides the output audio signal (11b+13b+19b) to be provided to the second point B only to the fourth physical terminal 17. Since the third point C is the physical terminal, the audio processing unit 117 transmits the output audio signal (11b+13b+15b+17b) to be provided to the third point C to the fifth physical terminal 19.

Among the physical terminals constituting the logical terminal, to the terminal other than the output-dedicated physical terminal, the RTP packet having no audio signal may be transmitted. Herein, "no audio signal" refers to, for example, an audio signal having no amplitude. According to an embodiment, the RTP packet itself for the audio signal may not be transmitted.

Therefore, in the first point A that is the logical terminal, the first physical terminal 11 outputs the output audio signal (15b+17b+19b) through its speaker 11-2, and does not output any audio through the speaker 13-2 of the second physical terminal 13. Similarly, in the second point B that is the logical terminal, the fourth physical terminal 17 outputs the output audio signal (11b+13b+19b) through its speaker 17-2, and does not output any audio through the speaker 15-2 of the third physical terminal 15.

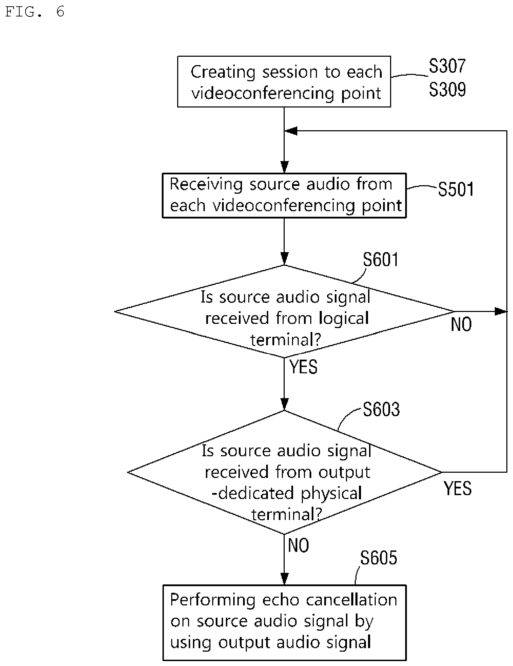

Paring echo cancelling in the logical terminal (FIG. 6)

As described above, since all the physical terminals participating in the videoconferencing configured by the server 110 are each the terminal for videoconferencing regardless of the configuration of the logical terminal, the source audio signals being input to their microphones are not output their speakers.

In addition, the physical terminal participating in the videoconferencing configured by the server 110 may have an echo cancellation function regardless of the configuration of the logical terminal. However, in order to remove the echo from the input source audio signal, an audio signal (output audio signal) for reference is required. The output audio signal to be transmitted to the logical terminal is transmitted only to the output-dedicated physical terminal. Therefore, the videoconferencing terminal that belongs to the logical terminal but is not the output-dedicated physical terminal does not have the reference audio signal for performing the echo cancellation function.

In the example in FIG. 4, since in the first logical terminal 130, the first physical terminal 11 is set as the output-dedicated physical terminal, the audio processing unit 117 transmits the output audio signal to be transmitted to the first logical terminal 130 only to the first physical terminal 11 but not to the second physical terminal 13. Describing for understanding, this does not mean that the audio processing unit 117 does not transmit any RTP packet to the second physical terminal 13. Only the audio signal provided to the first physical terminal 11 for output is not provided.

Conversely, on the side of the first logical terminal 130, the first physical terminal 11 and the second physical terminal 13 transmit, to the server 110, the source audio signals 11b and 13b received through their microphones 11-1 and 13-1, respectively. Herein, the first physical terminal 11 that is the output-dedicated physical terminal receives, from the server 110, the audio signal for output, and is thus capable of performing echo cancellation on the signal input through the microphone 11-1. However, the second physical terminal 13 is not the output-dedicated physical terminal and thus does not receive the output audio signal from the server 110 and does not have the reference signal for the echo cancellation.

Therefore, the second physical terminal 13 is not capable of performing echo cancellation on the source audio signal input through the microphone 13-1. Accordingly, the echo processing unit 119 of the videoconferencing server 110 of the present disclosure performs the echo cancellation function.

The echo processing unit 119 performs the echo cancellation function before mixing for the output audio signal to be provided to each videoconferencing point, and may perform basic noise cancellation when necessary. The echo cancellation of the present disclosure is completely different from the echo cancellation in the conventional general videoconferencing system or equipment. Hereinafter, the echo cancellation function which is the feature of the present disclosure is referred to as "paring echo cancelling".

When the source audio received at the logical terminal side is not provided by the output-dedicated physical terminal, the echo processing unit 119 uses the output audio signal transmitted to the logical terminal so as to remove the echo. Hereinafter, the echo cancellation method of the videoconferencing server 110 will be described with reference to FIG. 6. The method in FIG. 6 is performed after the SIP session is created between the server 110 and each physical terminal according to steps S307 and S309 in FIG. 3.

First, at step S501, when the audio processing unit 117 receives the source audio signal from each of the physical terminals 11, 13, 15, 17, and 19 participating in the videoconferencing, the echo processing unit 119 determines whether the source audio signal is the signal that is provided by the terminal other than the output-dedicated physical terminal as the physical terminal belonging to the logical terminal, at steps S601 and S603.

As the result of the determination at steps S601 and S603, when the source audio signal is the signal that is provided by the terminal other than the output-dedicated physical terminal as the physical terminal belonging to the logical terminal, the echo processing unit 119 performs the echo cancellation function on the basis of the output audio signal transmitted to the logical terminal. An echo cancellation algorithm of the echo processing unit 119 is an algorithm where waveform which is the same as that of the output audio signal is removed from the input audio signal, and a commonly known echo cancellation algorithm may be used. In the example in FIG. 4, the echo processing unit 119 compares the source audio signal provided by the second physical terminal 13 with the output audio signal transmitted to the first physical terminal 11 that is the output-dedicated physical terminal, and removes the echo. When the source audio signal provided by the second physical terminal 13 has an echo, the source audio signal has the same waveform as the output audio signal transmitted to the first physical terminal 11. Therefore, the echo is removed by the echo cancellation algorithm at step S605.

As the result of the determination at steps S601 and S603, when the audio signal is not transmitted from the logical terminal or is the signal provided by the output-dedicated physical terminal as the physical terminal belonging to the logical terminal, the echo processing unit 119 does not need to perform the echo cancellation function. This is because the output-dedicated physical terminal has its own echo cancellation function and removes the echo. As another method, as in step S603, through comparison with the output audio signal that has already been transmitted to the first physical terminal 11, the echo may be removed.

Using the above-described method, the paring echo cancelling of the present disclosure is performed.

(Embodiment) Another method for audio processing and echo cancellation in the logical terminal

In the example described above, the audio processing unit 117 provides the output audio signal only to the output-dedicated physical terminal, but no limitation thereto is imposed. For example, the same output audio signals may be provided to all the physical terminals constituting the logical terminal. However, only the output-dedicated physical terminal outputs the output audio signal, and the remaining physical terminal simply uses the output audio signal as a reference audio signal for echo cancellation.

The audio processing unit 117 transmits the same output audio signals to all the physical terminals constituting the logical terminal, but the audio signal in the RTP packet provided to the output-dedicated physical terminal is marked as "for output", and the audio signal in the RTP packet provided to the remaining physical terminal is marked as "for echo cancellation". In this case, echo cancellation is performed in each physical terminal, and thus the server 110 does not need to have the echo processing unit 119.

For example, in the example in FIG. 4, in the case where the audio processing unit 117 has the output audio signal to be provided to the first logical terminal 130, the output audio signal is transmitted to the first physical terminal 11 that is the output-dedicated physical terminal, being marked as "for output". The output audio signal is transmitted to the second physical terminal 13, being marked as "for echo cancellation".

Accordingly, the first physical terminal 11 outputs the output audio signal through the speaker 11-2. The second physical terminal 13 retains the output audio signal provided from the server 110 without outputting the output audio signal through the speaker 13-2, and uses the output audio signal for removing the echo from the audio signal received through the microphone 13-1.

Although the exemplary embodiments of the present disclosure have been illustrated and described above, the present disclosure is not limited to the aforesaid particular embodiments, and can be variously modified by those skilled in the art without departing the gist of the present disclosure defined in the claims. The modifications should not be understood individually from the technical idea or perspective of the present disclosure.

## Claims

1. A videoconferencing service provision method of a videoconferencing server, the method comprising:

   a registration step where multiple physical terminals are registered as a first logical terminal so that the multiple physical terminals operate like one videoconferencing point, and one of the multiple physical terminals is registered as an output-dedicated physical terminal;
   a call connection step where videoconferencing between multiple videoconferencing points is connected, and with respect to the first logical terminal, individual connections to the multiple physical terminals constituting the first logical terminal are provided;
   a source audio reception step where source audio signals provided by the multiple videoconferencing points are received, and with respect to the first logical terminal, the source audio signals are received from the respective multiple physical terminals;
   an audio processing step where from entire source audio received at the source audio reception step, the audio signals provided by the other videoconferencing points are mixed into an output audio signal to be provided to the first logical terminal; and

   an audio output step where the output audio signal is transmitted to the output-dedicated physical terminal among the multiple physical terminals belonging to the first logical terminal, whereby the first logical terminal operates as one virtual videoconferencing point.

2. The method of claim 1, further comprising:
   removing, by using the output audio signal, an echo from the source audio signal provided by the physical terminal other than the output-dedicated physical terminal among the source audio signals received from the first logical terminal.

3. The method of claim 1, wherein at the audio output step, the output audio signal is transmitted to the physical terminal other than the output-dedicated physical terminal among the multiple physical terminals belonging to the first logical terminal so that the output audio signal is used for echo cancellation, and thus the physical terminal other than the output-dedicated physical terminal does not output the output audio signal to a speaker and uses the output audio signal as a reference audio signal for echo cancellation.

4. The method of claim 1, wherein at the audio processing step, when the other videoconferencing points are a second logical terminal including multiple physical terminals, one audio signal selected among audio signals provided by the multiple physical terminals belonging to the second logical terminal is mixed into the output audio signal to be provided to the first logical terminal.

5. The method of claim 1, further comprising:

   a source video reception step where source videos provided by the multiple videoconferencing points are received, and with respect to the first logical terminal, the source videos are received from the respective multiple physical terminals; and
   a multiscreen video provision step where among all the source videos received at the source video reception step, the videos provided by the other videoconferencing points are distributed to the multiple physical terminals of the first logical terminal, whereby the first logical terminal operates as the one virtual videoconferencing point.

6. The method of claim 1, wherein the call connection step comprises:

   receiving a call connection request message from a calling party point;
   inquiring, while a calling party and a called party are connected in response to the receiving of the call connection request message, whether the calling party or the called party is the first logical terminal;

creating, when the calling party is the physical terminal of the first logical terminal as a result of the inquiring, individual connections to the other physical terminals of the first logical terminal; and

creating, when the called party requested for call connection is a physical terminal of a second logical terminal as the result of the inquiring, individual connections to the other physical terminals of the second logical terminal.

7. A videoconferencing server capable of providing a videoconferencing service, the server comprising:

a terminal registration unit registering multiple physical terminals as a first logical terminal that operates like one videoconferencing point, and registering one of the multiple physical terminals as an output-dedicated physical terminal;

a teleconversation connection unit connecting videoconferencing between multiple videoconferencing points including the first logical terminal wherein with respect to the first logical terminal, individual connections to the multiple physical terminals constituting the first logical terminal are provided, and receiving source audio signals from the multiple videoconferencing points wherein with respect to the first logical terminal, the source audio signals are received from the respective multiple physical terminals; and

an audio processing unit mixing the audio provided by the other videoconferencing points from entire source audio received, into an output audio signal to be provided to the first logical terminal, and transmitting the output audio signal to the output-dedicated physical terminal among the multiple physical terminals belonging to the first logical terminal.

8. The server of claim 7, further comprising:
an echo processing unit removing, by using the output audio signal, an echo from the source audio signal provided by the physical terminal other than the output-dedicated physical terminal among the source audio signals received from the first logical terminal.

9. The server of claim 7, wherein the audio processing unit transmits the output audio signal to the physical terminal other than the output-dedicated physical terminal among the multiple physical terminals belonging to the first logical terminal so that the output audio signal is used for echo cancellation, and thus the physical terminal other than the output-dedicated physical terminal does not output the output audio signal to a speaker and uses the output audio signal as a reference audio signal for echo cancellation.

10. The server of claim 7, wherein the audio processing unit mixes, when the other videoconferencing points are a second logical terminal including multiple physical terminals, one audio signal selected among audio signals provided by the multiple physical terminals belonging to the second logical terminal into the output audio signal to be provided to the first logical terminal.

11. The server of claim 7, wherein the teleconversation connection unit receives source videos from the multiple videoconferencing points, and receives, with respect to the first logical terminal, the source videos from the respective multiple physical terminals, and the server further comprises: a video processing unit distributing the videos provided by the other videoconferencing points among all the source videos received by the teleconversation connection unit to the multiple physical terminals of the first logical terminal.

12. The server of claim 7, wherein the teleconversation connection unit is configured to inquire, while a calling party and a called party are connected in response to a call connection request message from a calling party point, whether the calling party or the called party is the first logical terminal, to create, when the calling party is the physical terminal of the first logical terminal as a result of the inquiring, individual connections to the other physical terminals of the first logical terminal, and to create, when the called party requested for call connection is a physical terminal of a second logical terminal as the result of the inquiring, individual connections to the other physical terminals of the second logical terminal.

FIG. 1

100

SERVER

110

111 Terminal registration unit

113 Teleconversation connection unit

117 Audio processing unit

119 Echo processing unit

115 Video processing unit

Network (30)

A

130

11
11-1
11-2

13
13-1
13-2

B

150

15
15-1
15-2

17
17-1
17-2

C

19
19-1
19-2

FIG. 2

EP 3 796 647 A1

16

FIG. 3

CALLED PARTY

Register

S307 — Calling all terminals of logical terminal to which receiver belongs/ creating sessions

S309

Source Videos 15a, 17a, 19a

S311

S313

110

SERVER

S301 — Registering physical terminal /logical terminal

Inquiring whether called party or calling party is logical terminal

S305

When caller is component of logical terminal, session to remaining terminal is created

Receiving source video from each physical terminal

Reprocessing source video

S315 — Providing video reprocessed for each physical terminal to each physical terminal

Source Videos 11a, 13a

CALLING PARTY

Register

INVITE

S303

FIG. 4

FIG. 5

```
┌─────────────────────────────┐
│   Creating session to each  │─────── S307
│   videoconferencing point   │        S309
└─────────────────────────────┘
                │
                ▼
┌─────────────────────────────┐
│   Receiving source audio from │───── S501
│   each videoconferencing point│
└─────────────────────────────┘
                │
                ▼
┌─────────────────────────────┐
│   Mixing source audio signals to │── S503
│   generate output audio signal   │
└─────────────────────────────┘
                │
                ▼
┌─────────────────────────────┐
│ Transmitting output audio signal │── S505
│ to each point                    │
│ (transmission to                 │
│ output-dedicated physical        │
│ terminal at logical terminal side)│
└─────────────────────────────┘
```

FIG. 6

```
┌─────────────────────────┐
│ Creating session to each │──── S307
│ videoconferencing point  │     S309
└─────────────────────────┘
              │
              ▼
┌─────────────────────────┐
│ Receiving source audio from │── S501
│ each videoconferencing point│
└─────────────────────────┘
              │
              ▼         S601
         ╱─────────────╲
        ╱ Is source audio signal ╲
       ⟨  received from logical    ⟩──── NO
        ╲ terminal?             ╱
         ╲─────────────╱
              │ YES
              ▼         S603
         ╱─────────────╲
        ╱ Is source audio signal ╲
       ⟨  received from output     ⟩──── YES
        ╲ -dedicated physical     ╱
         ╲ terminal?             ╱
          ╲─────────────╱
              │ NO
              ▼         S605
┌─────────────────────────┐
│ Performing echo cancellation │
│ on source audio signal by    │
│ using output audio signal    │
└─────────────────────────┘
```

## INTERNATIONAL SEARCH REPORT

| International application No. |
|---|
| **PCT/KR2019/001904** |

**A. CLASSIFICATION OF SUBJECT MATTER**

*H04N 7/15(2006.01)i, H04N 7/14(2006.01)i, G10L 21/02(2006.01)i*

According to International Patent Classification (IPC) or to both national classification and IPC

**B. FIELDS SEARCHED**

Minimum documentation searched (classification system followed by classification symbols)
H04N 7/15; H04L 12/18; H04N 5/232; H04W 4/08; H04W 4/20; H04N 7/14; G10L 21/02

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: video conference, point, source video, audio, logical terminal, registration, call connection, echo cancellation

**C. DOCUMENTS CONSIDERED TO BE RELEVANT**

| Category* | Citation of document, with indication, where appropriate, of the relevant passages | Relevant to claim No. |
|---|---|---|
| Y | KR 10-2007-0054769 A (SAMSUNG ELECTRONICS CO., LTD.) 30 May 2007 See paragraphs [0029]-[0033], [0052], [0057]; and figures 1, 3, 5. | 1,4,7,10 |
| A | | 2-3,5-6,8-9,11-12 |
| Y | JP 08-294106 A (SAMSUNG ELECTRONICS CO., LTD.) 05 November 1996 See paragraphs [0010], [0020]; and figure 6. | 1,4,7,10 |
| A | KR 10-2000-0037652 A (DAEWOO ELECTRONICS CO., LTD.) 05 July 2000 See pages 8-4, lines 7-12; and figure 6. | 1-12 |
| A | KR 10-2014-0098573 A (ELECTRONICS AND TELECOMMUNICATIONS RESEARCH INSTITUTE) 08 August 2014 See paragraphs [0026]-[0027]. | 1-12 |
| A | KR 10-2014-0003150 A (TI SQUARE TECHNOLOGY LIMITED) 09 January 2014 See paragraph [0045]. | 1-12 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 JUNE 2019 (07.06.2019) | **07 JUNE 2019 (07.06.2019)** |

| Name and mailing address of the ISA/KR | Authorized officer |
|---|---|
| Korean Intellectual Property Office Government Complex Daejeon Building 4, 189, Cheongsa-ro, Seo-gu, Daejeon, 35208, Republic of Korea Facsimile No. +82-42-481-8578 | Telephone No. |

Form PCT/ISA/210 (second sheet) (January 2015)

**INTERNATIONAL SEARCH REPORT**
Information on patent family members

International application No.

**PCT/KR2019/001904**

| Patent document cited in search report | Publication date | Patent family member | Publication date |
|---|---|---|---|
| KR 10-2007-0054769 A | 30/05/2007 | KR 10-0725780 B1 | 08/06/2007 |
| JP 08-294106 A | 05/11/1996 | KR 10-0163723 B1<br>KR 95-0005807 B1<br>US 05936662 A | 15/01/1999<br>31/05/1995<br>10/08/1999 |
| KR 10-2000-0037652 A | 05/07/2000 | None | |
| KR 10-2014-0098573 A | 08/08/2014 | None | |
| KR 10-2014-0003150 A | 09/01/2014 | KR 10-1393077 B1 | 12/05/2014 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020160062787 A